# FASCICULE DE BREVET EUROPEEN

(11) **EP 2 122 082 B1**
(45) Date de publication et mention de la délivrance du brevet: **23.06.2010**
(21) Numéro de dépôt: 07872423.4
(22) Date de dépôt: 20.12.2007
(51) Int. Cl.: E04D 3/36, F16B 35/04

(54) **DISPOSITIF POUR LA FIXATION PAR VISSAGE D'UN REVETEMENT COMPRESSIBLE**
VORRICHTUNG ZUR BEFESTIGUNG EINES KOMPRIMIERBAREN BELAGES MITTELS VERSCHRAUBUNG
DEVICE FOR SECURING A COMPRESSIBLE COATING BY SCREWING

(30) Priorité: 22.12.2006 FR 0611309; 20.12.2007 FR 0708931
(43) Date de publication de la demande: 25.11.2009
(73) Titulaire: Ateliers LR Etanco, 78230 Le Pecq (FR)
(72) Inventeur: LEMONTEY, Michel, F-78580 Maule (FR)
(74) Mandataire: de Saint-Palais, Arnaud Marie
(86) Numéro de dépôt international: PCT/FR2007/002139
(87) Numéro de publication internationale: WO 2008/093025

(56) Documents cités:
- DE-U1- 20 213 858
- US-A- 5 707 191

## Description

La présente invention concerne un dispositif pour la fixation par vissage d'un revêtement compressible sur une structure de support.

Elle s'applique notamment, mais non exclusivement, à la fixation par vissage d'une membrane d'étanchéité couvrant une garniture d'isolation réalisée en un matériau compressible portée par un support rigide tel qu'un bac acier ou un autre support rigide de couverture monté sur une charpente.

Le document US 5707191 est considéré, selon le préambule de la revendication 1, comme étant l'état de la technique le plus proche.

D'une manière générale, on sait que pour effectuer une telle fixation, on utilise un ensemble vis/plaquette faisant intervenir une vis auto-perforante et auto-taradeuse et des plaquettes, habituellement en tôle d'acier présentant une partie centrale en forme de cuvette, au centre de laquelle est réalisé un orifice central, sensiblement coaxial, servant pour le passage d'une vis.

Cette cuvette sert à contenir la tête de la vis une fois le vissage effectué, de manière à pouvoir disposer une garniture d'étanchéité, par exemple une bande adhésive destinée à assurer la continuité de l'étanchéité de la membrane au niveau de l'ensemble vis/plaquette.

Lors de la pose, la plaquette doit être engagée le long de la vis et demeurer au voisinage de la tête.

Par ailleurs, il s'avère souhaitable qu'une fois le vissage effectué, la plaquette ne puisse pas coulisser vers la pointe lorsqu'elle est soumise à un effort tendant à comprimer la garniture d'isolation (ceci peut, par exemple, se produire lorsqu'un opérateur marche sur la membrane d'étanchéité). Dans ce cas, l'ensemble plaquette/membrane est localement enfoncé tandis que la tête de la vis a tendance à venir en saillie au-dessus de la plaquette. La garniture d'étanchéité risque alors d'être décollée de la membrane d'étanchéité, voire même perforée. Dans un cas comme dans l'autre, l'étanchéité de l'ensemble de la couverture se trouve compromise.

Pour tenter de parvenir de supprimer ce risque, il a déjà été proposé de nombreuses solutions consistant à prévoir un filetage sous tête de la vis dont le diamètre extérieur est légèrement plus grand que le diamètre extérieur du filetage de fixation.

Grâce à cette disposition, en fin de vissage de la vis, le filetage sous tête vient s'engager et se visser dans l'orifice en assurant ainsi un blocage axial de la plaquette.

Toutefois, cette solution se heurte au fait que les efforts exercés au niveau de ces surfaces sous l'effet du pas d'une personne sont tels que le métal de la vis et/ou de la plaquette se déforme en libérant la plaquette contrairement au but recherché.

Pour tenter de supprimer ces inconvénients, on a proposé, notamment par le modèle d'utilité allemand DE 202 13 858 une solution consistant à prévoir au niveau de la plaquette une cuvette présentant un fond plat muni d'un perçage coaxial et, au niveau de la vis, un filetage auto-taraudant sous tête dont le diamètre des filets, supérieur au diamètre de la tige de la vis, présente une forme évolutive allant en s'évasant en direction de ladite tête.

Grâce à ces dispositions, lors du vissage du filetage sous tête dans l'orifice de la plaquette, l'orifice de la plaquette est soumis à un processus d'auto-taraudage progressif qui engendre la formation d'une fente radiale par laquelle s'engage le filet de la vis.

En fin de vissage, l'appui entre la plaquette et le filetage sous tête s'effectue au niveau d'une couronne d'appui présentant un diamètre relativement grand (par rapport aux solutions antérieures) et selon des surfaces d'appui beaucoup plus importantes.

Toutefois, on constate que cette solution ne permet pas d'atteindre tous les résultats escomptés, en effet :

Lorsqu'un effort axial est exercé sur le filetage sous tête par la plaquette, cet effort a tendance à replier vers l'intérieur le fond de la cuvette, ce repliement ayant tendance à augmenter le diamètre du perçage coaxial, et donc à libérer la plaquette. Ce repliement est favorisé par la présence de la fente et se manifeste plus particulièrement lorsque sous l'effet d'un couple exercé la plaquette est soumise à un effort axial désaxé (en porte à faux) et rotule sur le filetage sous tête. Le repliement produit est particulièrement important lorsque le point d'appui du fond de la cuvette sur le filetage est situé sur ou au voisinage de la fente.

L'invention a donc plus particulièrement pour but de supprimer cet inconvénient.

A cet effet, elle propose un dispositif de fixation faisant intervenir :
- d'une part, une plaquette dont la cuvette se termine par un fond bombé muni d'un perçage coaxial, et
- d'autre part, une vis comportant un filetage sous tête dont le filet est inscrit dans une forme par exemple cylindrique de diamètre supérieur au diamètre dudit perçage, ce filet présentant une forme dissymétrique comportant, côté tête, une face inclinée selon une pente au plus égale à 15° par rapport à un plan radial de la vis,
la forme de la cuvette étant telle qu'elle présente dans un plan axial une tangente faisant un angle compris entre 15 et 75° par rapport à l'axe de la cuvette.

Grâce à ces dispositions, lorsque le filetage sous tête est vissé dans le perçage de la cuvette de la plaquette, le bord du perçage vient porter sur la face située côté tête du filet selon un angle d'attaque tel qu'un effort axial exercé sur la plaquette en direction de la pointe de la vis tend à déformer la cuvette dans le sens d'un rétrécissement du diamètre du perçage, en confirmant ainsi le blocage axial de la plaquette sur la vis.

Cette solution présente l'avantage de permettre à la plaquette de rotuler sur la vis sans compromettre ce blocage axial.

En effet, lorsque la plaquette est soumise à un effort décentré, la plaquette bascule et au cours de ce basculement, le bord du perçage situé du côté où s'exerce l'effort glisse sur la face supérieure du filet pour venir se bloquer au fond de la gorge interfilet, position dans laquelle l'effort résistant est maximum et est orienté dans une direction dans laquelle la résistance de la cuvette à la déformation (à l'exception de la zone entourant le perçage) est la plus grande.

Ce résultat est encore plus important dans le cas où l'effort auquel est soumise la plaquette est exercé dans un plan axial de la fente réalisée dans la cuvette. Dans ce cas, les bords du perçage situés de part et d'autre de la fente s'engageront en fond de la gorge interfilet de part et d'autre du filet en exerçant ainsi une double résistance.

Il s'agit là de résultats surprenants relativement à ceux obtenus par la solution connue précédemment évoquée.

Des modes d'exécution de l'invention seront décris ci-après, à titres d'exemples non limitatifs, avec référence aux dessins annexés dans lesquels :

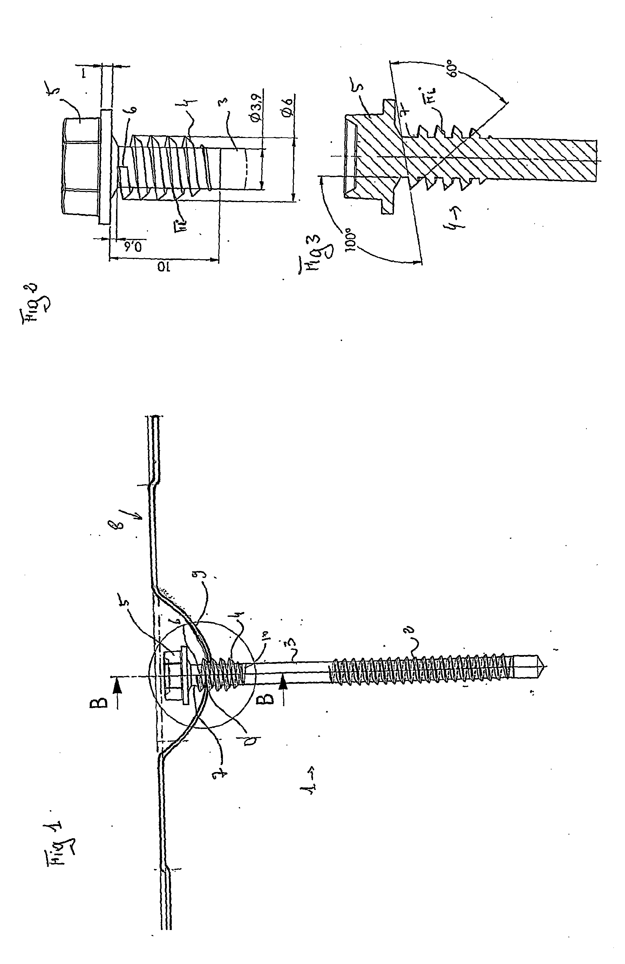

La figure 1 est une vue en élévation d'une vis de fixation de garniture d'étanchéité présentant un filetage sous tête à filet dissymétrique sur lequel est vissée une plaquette ;
Les figures 2 et 3 sont des vues à plus grande échelle de la partie supérieure de la vis, vue en élévation (figure 2) et vue en coupe axiale (figure 3) ;
Les figures 4 et 5 sont des représentations schématiques en coupe partielle à différentes échelles montrant le comportement du bord du perçage de la cuvette sur la face du filet du filetage sous tête de la vis (côté tête) lorsqu'un effort axial est appliqué sur la plaquette ;
Les figures 6 à 8 sont des coupes axiales schématiques à plus grande échelle illustrant le comportement d'une plaquette vissée sur le filetage sous tête de la vis sous l'effet d'un effort exercé sur la plaquette coaxialement (figure 6), en porte à faux par rapport à la vis (figures 7 et 8).

Dans ces exemples, le dispositif de fixation fait intervenir une vis de fixation 1, ici de type auto-perforante et/ou autotaraudeuse comportant, en partant de sa pointe, un premier filetage 2 suivi d'une portion cylindrique lisse 3 puis d'un second filetage 4 de diamètre supérieur au diamètre du premier filetage. Le deuxième filetage 4, dit filetage sous tête, se termine au niveau de la tête 5 de la vis. Dans cet exemple, il se termine par un arrêt franc 6 à une distance prédéterminée de la tête en délimitant avec celle-ci un tronçon lisse sous tête 7.

Cette vis 1 est destinée à venir s'engager et à se visser grâce au filetage sous tête 4 dans le perçage central d'une plaquette 8 en tôle d'acier servant à retenir une garniture d'isolation.

Dans cet exemple, cette plaquette 8, de forme rectangulaire, présente une partie centrale en forme de cuvette 9 au centre de laquelle est formé ledit perçage.

Cette cuvette 9 sert à loger la tête 5 de la vis 1 de manière à permettre le recouvrement de la plaquette 8 par une couche adhésive destinée à assurer la continuité de l'étanchéité de la garniture au niveau de la plaquette 8.

Dans cet exemple, le diamètre de la tige de la vis 1 (diamètre des portions lisses 3 et 7) est de 3,9 mm, le diamètre du cylindre dans lequel s'inscrit le filetage sous tête 4 est de 6 mm, la hauteur de la partie lisse sous tête 7 est de 1,6 mm et la distance entre la tête 5 et l'extrémité, côté pointe, du filetage sous tête 4 est égale à 10 mm. La première spire 10 du filetage sous tête 4 est constituée par un filet mourant, conformément aux techniques usuelles de réalisation par roulage de ce type de filetage. Le diamètre du cylindre dans lequel est inscrit le premier filetage 2, de même que le diamètre de l'orifice de la plaquette 8 est sensiblement à 5 mm.

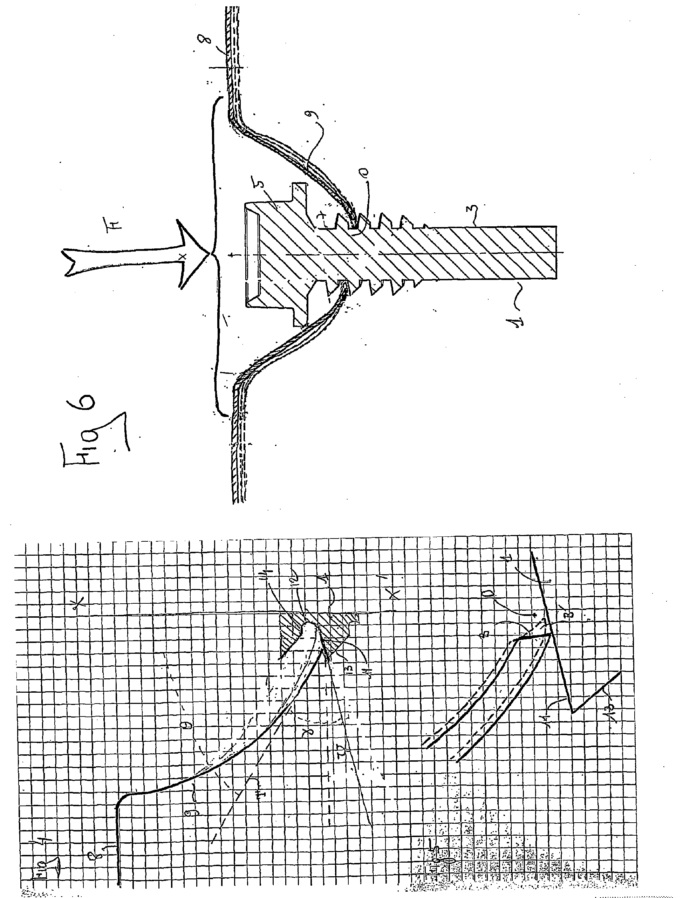

Conformément à l'invention, la cuvette 9 de la plaquette 8 présente une forme bombée présentant au niveau de l'orifice O, dans un plan axial, une tangente T d'angle θ compris entre 15° et 75°, de préférence entre 30° et 60°, par rapport à l'axe de la cuvette. Par ailleurs, le filetage sous tête 4 de la vis 1 comprend un filet dissymétrique comportant, côté tête de la vis, une face inclinée 11 faisant un angle U au plus égal à 15° par rapport à un plan radial de la vis (figure 4). Cette face inclinée 11 se prolonge jusqu'au fond de la gorge interfilet 12 formée entre deux spires consécutives du filet.

Par contre, la face inférieure 13 du filet (côté pointe) fait un angle d'environ 30 à 65°, de préférence 45° et est prolongée par une portion radiale 14 (perpendiculaire à l'axe XX' de la vis 1).

On constate que dans cet exemple, le diamètre du perçage O de la plaquette est beaucoup plus faible que le diamètre maximum du filetage sous tête 4. La profondeur de la gorge interfilet 12 de ce filetage est plus importante que celle du filetage principal 2, côté pointe.

Au cours du vissage, le filet 4 taille une encoche dans le métal de la plaquette 8 tandis que la bordure de l'orifice O se déforme pour s'engager dans la gorge 12 sur une longueur correspondant à un pas du filetage.

Ce processus est facilité par le fait que, comme ceci est visible figure 5, le bord circulaire B du perçage O de la plaquette 8 s'étend en biseau et offre donc au filetage sous tête 4 une résistance progressive.

En fin de vissage, le bord circulaire B de l'orifice O vient prendre appui sur la face supérieure 11 du filet, l'angle y formé entre la face 11 et la tangente T de la cuvette 9 au point d'appui, dans un plan axial étant de l'ordre de 30 à 60°.

Grâce à ces dispositions, lorsqu'une force F est exercée sur la plaquette 8, en direction de la pointe de la vis 1, coaxialement à celle-ci (figure 6), cette force se répercute de façon homogène au niveau de l'arête du bord B de l'orifice O qui se trouve alors soumis à la force résistante exercée par la face supérieure 11 du filet de la vis 1.

Cet effort résistant provoque alors une déformation B' du bord B du perçage O provoquant une réduction de son diamètre. Cette déformation est favorisée en raison de la forme en biseau du bord B de la plaquette 8 autour de l'orifice O. Cette réduction de diamètre se poursuit jusqu'à ce que la bordure du perçage vienne en butée sur le fond de la gorge interfilet 12. Parallèlement, l'ensemble de la cuvette se déforme légèrement en contribuant à accroître la réduction de diamètre du perçage O.

On constate donc que, contrairement aux préjugés, la résistance à l'enfoncement de la plaquette 8 s'accroît en fonction de l'effort exercé sur la plaquette 8 vers la pointe de la vis 1.

Un autre avantage important de la solution précédemment décrite consiste en ce qu'elle autorise la plaquette 8 à rotuler sur le filetage sous tête 4 sans pour autant réduire sa résistance à l'enfoncement.

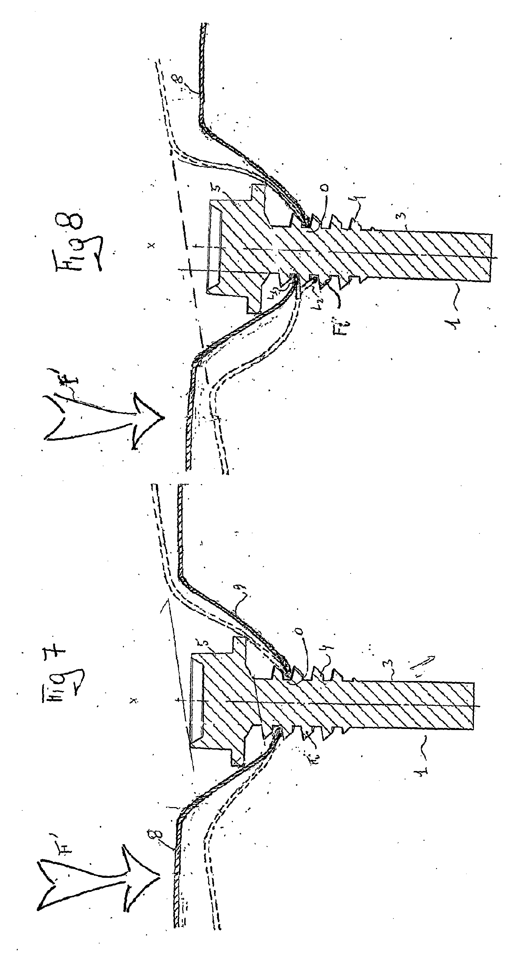

Ainsi, comme illustré sur la figure 7, si l'on exerce sur la plaquette 8 un effort F' en porte à faux, en un point de la plaquette 8 qui n'est pas dans un plan passant par la fente réalisée lors du vissage dans la bordure B du perçage O, la plaquette 8 va basculer autour du point d'appui situé entre la bordure B du perçage O et la face supérieure 11 du filet Fi. Parallèlement, le bord du perçage O situé à l'opposé de ce point d'appui vient porter sur la face inférieure du filet Fi (ou de son prolongement radial). Le couple exercé sur la plaquette 8 provoque alors la déformation de la bordure B du perçage O qui vient alors s'engager à fond dans la gorge interfilet 12. Du fait de la réduction de diamètre du perçage O ainsi produite, la bordure B du perçage O située à l'opposé du point d'appui reste engagée dans la gorge interfilet 12. Ici également, on obtient un accroissement de la résistance de la plaquette 8 à l'enfoncement. Lorsque cesse l'effort qui a produit le basculement de la plaquette 8, celle-ci peut revenir à sa position initiale avec une résistance à l'enfoncement accrue du fait de la réduction de diamètre du perçage.

Dans le cas où le point d'application de l'effort est situé dans un plan passant par l'axe de la fente, les deux lèvres L₁, L₂ de la fente subissent une déformation tendant à les amener respectivement au fond des deux portions de la gorge interfilet 12 situées de part et d'autre de la portion du filet Fi qui s'engage dans la fente (figure 8).

On obtient donc une double déformation qui conduit à une réduction de diamètre du perçage O et à un double arc-boutement de la plaquette 8 sur la vis 1 du côté de la fente.

Bien entendu, l'invention ne se limite pas au mode d'exécution précédemment décrit. Ainsi, notamment, l'enveloppe du filetage sous tête pourra présenter une forme autre que cylindrique, telle que, par exemple, une forme évasée vers la tête, une forme conique, ovoïde, sphérique, parabolique, elliptique, ou même une forme comportant successivement une portion évasée et une portion allant en se rétrécissant.

De même, le filetage sous tête pourra se terminer, du côté de la tête, par un filet mourant. Dans tous les cas, le filetage sous tête pourra se terminer contre la face inférieure de la tête ou à distance de celle-ci. Dans ce dernier cas, la vis pourra comprendre entre le filetage sous tête et la tête de la vis, un tronçon de tige dénué de filet, par exemple un tronçon lisse.

## Revendications

1. Dispositif pour la fixation par vissage d'un revêtement compressible sur une structure de support, ce dispositif comprenant une plaquette (8) munie d'une cuvette (9) dont le fond est muni d'un perçage coaxial (O) et une vis (1) comportant un filetage sous tête (4) dont le diamètre est plus grand que celui dudit perçage (O),
**caractérisé en ce que** le filet du filetage sous tête (4) présente une forme dissymétrique comportant, côté tête, une face inclinée selon une pente au plus égale à 15° par rapport à un plan radial de la cuvette, et **en ce que** la cuvette (9) présente un fond bombé présentant dans un plan axial une tangente faisant un angle compris entre 15° et 75° par rapport à l'axe de la cuvette (9), de préférence entre 30° et 60°.

2. Dispositif selon la revendication 1,
**caractérisé en ce que** le bord de l'orifice (O) de la plaquette présente une forme en biseau.

3. Dispositif selon la revendication 1,
**caractérisé en ce que** le filet comprend du côté opposé à la tête une face inclinée selon une pente égale à 30, à 60° par rapport à un plan radial de la cuvette, de préférence égale à 45°.

4. Dispositif selon la revendication 3,
**caractérisé en ce que** la face du filet située du côté opposé à la tête est prolongée par une portion radiale (14) perpendiculaire à l'axe de la vis.

5. Dispositif selon l'une des revendications précédentes,
**caractérisé en ce que** le filetage sous tête (4) est inscrit dans une forme cylindrique.

6. Dispositif selon l'une des revendications précédentes,
**caractérisé en ce que** le filetage sous tête (4) se termine au niveau de la face inférieure de la tête (5).

7. Dispositif selon l'une des revendications 1 à 5,
**caractérisé en ce que** le filetage sous tête (4) est séparé de la tête (5) par une portion (7) dépourvue de filetage.

8. Dispositif selon la revendication 7,
**caractérisé en ce que** le filetage sous tête (4) se termine, côté tête (5), par un arrêt franc (6) dans un plan axial.

9. Dispositif selon la revendication 1,
**caractérisé en ce que** le filetage sous tête se termine, au moins d'un côté, par un filet mourant.

10. Dispositif selon l'une des revendications précédentes,
**caractérisé en ce que** le filetage sous tête est inscrit dans une forme évasée vers la tête, une forme conique, ovoïde, sphérique, parabolique, elliptique, ou même une forme comportant successivement une portion évasée et une portion allant en se rétrécissant.

## Claims

1. A device for fastening by screwing of a compressible coating on a carrier structure, this device comprising a plate (8) provided with a cup (9) whereof the bottom is provided with a coaxial bore (O) and a screw (1) including an under-head threading (4) whereof the diameter is larger than that of said bore (O), **characterized in that** the thread of the under-head threading (4) assumes an asymmetrical form including, on the head side, a side inclined at an angle not exceeding 15° relative to a radial plane of the cup, and **in that** the cup (9) has a curved bottom having, in an axial plane, a tangent forming an angle between 15° and 75° relative to the axis of the cup (9), preferably between 30° and 60°.

2. The device according to claim 1,
**characterized in that** the edge of the opening (O) of the plate has a beveled form.

3. The device according to claim 1,
**characterized in that** the thread comprises, on the side opposite the head, a side inclined at an angle equal to 30, 60° relative to a radial plane of the cup, preferably equal to 45°.

4. The device according to claim 3,
**characterized in that** the side of the thread situated on the side opposite the head is extended by a radial portion (14) perpendicular to the axis of the screw.

5. The device according to one of the preceding claims,
**characterized in that** the under-head threading (4) inscribed in a cylindrical shape.

6. The device according to one of the preceding claims,
**characterized in that** the under-head threading (4) ends at the lower face of the head (5).

7. The device according to one of claims 1 to 5,
**characterized in that** the under-head threading (4) is separated from the head (5) by a portion (7) without threading.

8. The device according to claim 7,
**characterized in that** the under-head threading (4) ends, on the head side (5), with a clean stop (6) in an axial plane.

9. The device according to claim 1,
**characterized in that** the under-head threading ends, at least on one side, by a refracting thread.

10. The device according to one of the preceding claims,
**characterized in that** the under-head threading is inscribed in a flared shape toward the head, a conical, ovoid, spherical, parabolic, or elliptical shape, or even a shape successively having a flared portion and a narrowing portion.

## Patentansprüche

1. Vorrichtung zur Befestigung mittels Verschraubung eines komprimierbaren Belags auf einer Trägerstruktur, wobei diese Vorrichtung eine Platte (8), die mit einer Senke (9) versehen ist, deren Boden mit einer koaxialen Bohrung (O) versehen ist, und eine Schraube (1), umfassend eine Kopfschraube (4), deren Durchmesser größer ist als derjenige der Bohrung (O), umfasst,
**dadurch gekennzeichnet, dass** der Schraubengang der Kopfschraube (4) eine unsymmetrische Form aufweist, umfassend, kopfseitig, eine mit einer Neigung von höchstens 15°, bezogen auf eine radiale Ebene der Senke, geneigte Fläche, und **dadurch**, dass die Senke (9) einen bauchigen Boden aufweist, der in einer axialen Ebene eine Tangente aufweist, die einen Winkel zwischen 15 ° und 75 °, Grenzen eingeschlossen, bezogen auf die Achse der Senke (9), vorzugsweise zwischen 30 ° und 60 ° erzeugt.

2. Vorrichtung nach Anspruch 1,
**dadurch gekennzeichnet, dass** der Rand der Öffnung (O) der Platte eine abgeschrägte Form aufweist.

3. Vorrichtung nach Anspruch 1,
**dadurch gekennzeichnet, dass** der Schraubengang an der dem Kopf gegenüberliegenden Seite eine geneigte Fläche mit einer Neigung entsprechend 30 ° bis 60 °, bezogen auf eine radiale Ebene der Senke, vorzugsweise entsprechend 45 ° umfasst.

4. Vorrichtung nach Anspruch 3,
**dadurch gekennzeichnet, dass** die gegenüber zum Kopf gelegene Fläche des Schraubengangs durch einen radialen Teil (14) senkrecht zur Achse der Schraube verlängert ist.

5. Vorrichtung nach einem der vorhergehenden Ansprüche,
**dadurch gekennzeichnet, dass** die Kopfschraube (4) eine zylindrische Form aufweist.

6. Vorrichtung nach einem der vorhergehenden Ansprüche,
**dadurch gekennzeichnet, dass** die Kopfschraube (4) an der Fläche unterhalb des Kopfes (5) endet.

7. Vorrichtung nach einem der Ansprüche 1 bis 5,
**dadurch gekennzeichnet, dass** die Kopfschraube (4) vom Kopf (5) durch einen Teil (7) ohne Schraubengang getrennt ist.

8. Vorrichtung nach Anspruch 7,
**dadurch gekennzeichnet, dass** die Kopfschraube (4), auf der Seite des Kopfes (5), durch einen bündigen Anschlag (6) in einer axialen Ebene endet.

9. Vorrichtung nach Anspruch 1,
**dadurch gekennzeichnet, dass** die Kopfschraube, auf mindestens einer Seite, in einem langsam auslaufenden Schraubengang endet.

10. Vorrichtung nach einem der vorhergehenden Ansprüche,
**dadurch gekennzeichnet, dass** die Kopfschraube eine in eine Richtung des Kopfes erweiterte Form, eine konische Form, Ei-Form, kugelige Form, Parabelform, elliptische Form oder auch eine Form aufweist, die nacheinander einen erweiterten Teil und einen sich verengenden Teil aufweist.
